# EUROPEAN PATENT APPLICATION

(11) **EP 4 503 759 A1**
(43) Date of publication of application: **05.02.2025**
(21) Application number: 22932757.2
(22) Date of filing: 25.03.2022
(51) Int. Cl.: H04W 52/02, H04W 68/02

(54) **METHOD AND APPARATUS FOR TRANSMITTING PAGING SEARCH SPACE CONFIGURATION INFORMATION, AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/083183
(87) International publication number: WO 2023/178696

(57) **Abstract**

The present disclosure provides a method and apparatus for transmitting paging search space configuration information, and a storage medium, applied to wireless communication technology. The method comprises: receiving configuration information sent by a network device, the configuration information being used for configuring a paging search space, and the paging search space being used for a user equipment (UE) to receive paging downlink control information (DCI); receiving a low-power-consumption wake-up signal sent by the network device; and receiving the paging DCI in the paging search space according to an indication of the low-power-consumption wake-up signal. In the present disclosure, the paging search space corresponds to all UEs which support the low-power-consumption wake-up signal or enable monitoring of the low-power-consumption wake-up signal, and matches the use of the low-power-consumption wake-up signal; when the low-power-consumption wake-up signal indicates wakeup, the UE may turn on a primary receiver to monitor the paging DCI in the latest paging monitoring occasion; compared with the manner in the prior art in which the primary receiver needs to be continuously on standby to receive the paging DCI in a PF/PO corresponding to a UE group, the paging delay is effectively reduced, and energy consumption of a terminal is also saved.

## Description

### TECHNICAL FIELD

The present disclosure relates to wireless communication technology, and more particularly to a method and apparatus for transmitting paging search space configuration information and a readable storage medium.

### BACKGROUND

In a wireless communication system, a user equipment (UE) monitors paging downlink control information (paging DCI) according to a paging cycle. Each paging cycle includes multiple paging frames (PFs)/paging occasions (POs), and the UE only needs to monitor the paging occasion corresponding to itself.

In the multi-beam scenario, one paging occasion includes multiple monitoring occasions (MOs). The number of the monitoring occasions included in one paging occasion is a product of S and X, where S is the number of synchronization signal block (SSB) beams that are actually transmitted, and if a network device configures a value of X for the user, the value of X is the value configured by the network device, and if the network device does not configure the value of X for the user, the value of X is 1. The [x*S+K]-th monitoring occasion in a paging occasion corresponds to the K-th transmitted SSB, where x=0, 1, ..., X-1, and K=1, 2, ..., S.

In an implementation, the configuration of a paging search space used for transmitting the paging downlink control information (paging DCI) is the same as the configuration of a general paging search space.

The UE can determine a time domain starting position of the first MO of the S *X MOs contained in the PO corresponding to the UE based on the paging frame (PF), the paging occasion and a parameter firstPDCCH-MonitoringOccasionOfPO configured by the network device, and determines, according to the configuration of the paging search space, the S*X PDCCH monitoring occasions after the time point of the time domain starting position of the first MO in time sequence as the S*X MOs corresponding to the PO.

In the scenario of using a wakeup signal (for example, WUS), a new paging mechanism can be introduced. The new paging mechanism no longer emphasizes the concept of paging cycle, nor is it limited to sending the paging DCI at the PF/PO corresponding to the user equipment. Instead, the network device can send the paging DCI according to the usage requirement of the user equipment. Therefore, how to configure the paging search space is a problem that needs to be solved.

### SUMMARY

The present disclosure provides a method and apparatus for transmitting paging search space configuration information, and a readable storage medium.

In a first aspect, there is provided a method for receiving paging search space configuration information, which is performed by a user equipment, and the method includes:
receiving configuration information sent by a network device, where the configuration information is used to configure a paging search space, and the paging search space is used for the user equipment to receive paging downlink control information (DCI);
receiving a low power wakeup signal sent by the network device; and
receiving the paging DCI in the paging search space according to indication of the low power wakeup signal.

In this method, the paging search space no longer corresponds to only a group of specific user equipments, but corresponds to all user equipments that support the low power wakeup signal or that turn on low power wakeup signal monitoring. In conjunction with the use of the low power wakeup signal, when the low power wakeup signal indicates waking up, the user equipment can turn on the primary receiver to monitor the paging DCI at the nearest paging monitoring occasion. Compared with the prior art in which the primary receiver needs to be on standby continuously and can only receive the paging DCI until the PF/PO corresponding to the UE group, the paging delay is effectively reduced, the terminal energy consumption is saved, and the energy loss caused by the primary receiver being on standby for a long time is avoided.

In some possible implementations, a cycle corresponding to the paging search space includes multiple PDCCH monitoring occasions, and each PDCCH monitoring occasion corresponds to a SSB beam that is actually transmitted.

In some possible implementations, the number of the PDCCH monitoring occasions included in one cycle of the paging search space is greater than or equal to M, where M is the number of SSBs that are actually transmitted.

In some possible implementations, the number of the PDCCH monitoring occasions included in one cycle of the paging search space is not an integer multiple of M.

In some possible implementations, the (i*M+k)-th PDCCH monitoring occasion within a cycle of the paging search space corresponds to the k-th actually transmitted SSB, where k is an integer greater than or equal to 1 and less than or equal to M, and i is an integer greater than or equal to 0.

In some possible implementations, the number of the PDCCH monitoring occasions included in one cycle of the paging search space is the product of M and N, where M is the number of the SSBs that are actually transmitted, and N is an integer greater than 0.

In some possible implementations, the method further includes:
receiving system message configuration information sent by the network device, where the system message configuration information includes information for determining N, N is an integer greater than or equal to 1.

In some possible implementations, the method further includes:
in response to no system message configuration information being received, determining a value of N to be 1.

In some possible implementations, the (x*M+k)-th PDCCH monitoring occasion within a cycle of the paging search space corresponds to the k-th actually transmitted SSB, where x is an integer greater than or equal to 0 and less than or equal to N-1, and k is an integer greater than or equal to 1 and less than or equal to M.

In a second aspect, there is provided a method for sending paging search space configuration information, which is performed by a network device, and the method includes:
sending configuration information to a user equipment, where the configuration information is used to configure a paging search space, and the paging search space is used for the user equipment to receive paging downlink control information (DCI);
sending a low power wakeup signal to the user equipment; and
sending the paging DCI in the paging search space.

In this method, the paging search space no longer corresponds to only a group of specific user equipments, but corresponds to all user equipments that support the low power wakeup signal or that turn on low power wakeup signal monitoring. In conjunction with the use of the low power wakeup signal, when the low power wakeup signal indicates waking up, the user equipment can turn on the primary receiver to monitor the paging DCI at the nearest paging monitoring occasion. Compared with the prior art in which the primary receiver needs to be on standby continuously and can only receive the paging DCI until the PF/PO corresponding to the UE group, the paging delay is effectively reduced, the terminal energy consumption is saved, and the energy loss caused by the primary receiver being on standby for a long time is avoided.

In some possible implementations, a paging cycle corresponding to the paging search space includes multiple PDCCH monitoring occasions; and
each PDCCH monitoring occasion corresponds to an actually transmitted SSB beam.

In some possible implementations, the number of PDCCH monitoring occasions included in one paging cycle is greater than or equal to M, where M is the number of the SSBs that are actually transmitted.

In some possible implementations, the number of PDCCH monitoring occasions included in one paging cycle is not an integer multiple of M.

In some possible implementations, the (i*M+k)-th PDCCH monitoring occasion within the paging cycle corresponds to the k-th actually transmitted SSB, where k is an integer greater than or equal to 1 and less than or equal to M.

In some possible implementations, the number of PDCCH monitoring occasions included in one paging cycle is the product of M and N, where M is the number of the SSBs that are actually transmitted, and N is an integer greater than 0.

In some possible implementations, the method further includes:
sending system message configuration information to the user equipment, where the system message configuration information includes information used to determine N, N being an integer greater than or equal to 1.

In some possible implementations, the (x*M+k)-th PDCCH monitoring occasion within the paging cycle corresponds to the k-th actually transmitted SSB, where x is an integer greater than or equal to 0 and less than or equal to N-1, and k is an integer greater than or equal to 1 and less than or equal to M.

In a third aspect, there is provided a communication apparatus. The communication apparatus may be configured to carry out the steps performed by the user equipment in the first aspect or any possible design of the first aspect. The user equipment may implement the functions in the above methods in the form of a hardware structure, a software module, or a hardware structure and a software module.

When the communication apparatus in the first aspect is implemented by the software module, the communication apparatus may include a transceiving module.

The transceiving module is configured to receive configuration information sent by a network device, where the configuration information is used to configure a paging search space, and the paging search space is used for the user equipment to receive paging downlink control information (DCI); is further configured to receive a low power wakeup signal sent by the network device; and is further configured to receive the paging DCI in the paging search space according to indication of the low power wakeup signal.

In a fourth aspect, there is provided a communication apparatus. The communication apparatus may be configured to carry out the steps performed by the user equipment in the second aspect or any possible design of the second aspect. The user equipment may implement the functions in the above methods in the form of a hardware structure, a software module, or a hardware structure and a software module.

When the communication apparatus in the second aspect is implemented by the software module, the communication apparatus may include a transceiving module.

The transceiving module is configured to send configuration information to the user equipment, where the configuration information is used to configure a paging search space, and the paging search space is used for the user equipment to receive paging downlink control information (DCI); is further configured to send a low power wakeup signal to the user equipment; and is further configured to send the paging DCI in the paging search space.

In a fifth aspect, there is provided a communication apparatus, including a processor and a memory; the memory is configured to store a computer program; and the processor is configured to execute the computer program to implement the first aspect or any possible design of the first aspect.

In a sixth aspect, there is provided a communication apparatus, including a processor and a memory; the memory is configured to store a computer program; and the processor is configured to execute the computer program to implement the second aspect or any possible design of the second aspect.

In a seventh aspect, there is provided a computer-readable storage medium having stored thereon instructions (or called a computer program or a program) which, when being called and executed on a computer, cause the computer to execute perform the above first aspect or any possible design of the first aspect.

In an eighth aspect, there is provided a computer-readable storage medium having stored thereon instructions (or called a computer program or a program) which, when being called and executed on a computer, cause the computer to execute perform the above second aspect or any possible design of the second aspect.

It should be understood that the foregoing general description and the following detailed description are illustrative and explanatory only and are not intended to restrict the present disclosure.

### BRIEF DESCRIPTION OF THE DRAWINGS

The drawings described herein are used to provide a further understanding of the embodiments of the present disclosure and constitute a part of the present disclosure. The illustrative embodiments of the embodiments of the present disclosure and the description thereof are used to explain the embodiments of the present disclosure and do not constitute improper limitations on the embodiments of the present disclosure. In the drawings,

The accompanying drawings herein are incorporated in and constitute a part of the specification, illustrate embodiments consistent with the embodiments of the present disclosure, and together with the description, serve to explain the principles of the embodiments of the present disclosure.
FIG. 1 is a schematic diagram of a wireless communication system architecture provided by an embodiment of the present disclosure;
FIG. 2 is a schematic diagram showing a method for transmitting paging search space configuration information according to an illustrative embodiment;
FIG. 3 is a schematic diagram showing a method for transmitting paging search space configuration information according to an illustrative embodiment;
FIG. 4 is a schematic diagram showing a method for transmitting paging search space configuration information according to an illustrative embodiment;
FIG. 5 is a schematic diagram showing a method for transmitting paging search space configuration information according to an illustrative embodiment;
FIG. 6 is a schematic diagram showing a method for transmitting paging search space configuration information according to an illustrative embodiment;
FIG. 7 is a structural diagram showing an apparatus for transmitting paging search space configuration information according to an illustrative embodiment;
FIG. 8 is a structural diagram showing an apparatus for transmitting paging search space configuration information according to an illustrative embodiment;
FIG. 9 is a structural diagram showing an apparatus for transmitting paging search space configuration information according to an illustrative embodiment; and
Fig. 10 is a structural diagram showing an apparatus for transmitting paging search space configuration information according to an illustrative embodiment.

### DETAILED DESCRIPTION

The embodiments of the present disclosure are now further described in conjunction with the accompanying drawings and specific implementations.

The illustrative embodiments will be described in detail herein, examples of which are shown in the accompanying drawings. When the following description refers to the drawings, unless otherwise indicated, the same numbers in different drawings represent the same or similar elements. The implementations described in the following illustrative embodiments do not represent all implementations consistent with the embodiments of the present disclosure. Rather, they are merely examples of apparatus and methods consistent with some aspects of the present disclosure as detailed in the appended claims.

The terms used in the embodiments of the present disclosure are only for the purpose of describing specific embodiments and are not intended to restrict the embodiments of the present disclosure. The singular form of "a" and "the" used in the embodiments of the present disclosure and the appended claims are also intended to include plural forms unless the context clearly indicates otherwise. It should also be understood that the term "and/or" used herein refers to and includes any or all possible combinations of one or more associated items listed.

It should be understood that although the terms such as first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the wording "if" as used herein may be interpreted as "when" or "in the case where" or "in response to determining".

The embodiments of the present disclosure are described in detail below, and examples of the embodiments are shown in the accompanying drawings, where the same or similar reference numerals always represent the same or similar elements. The embodiments described below with reference to the accompanying drawings are illustrative and are intended to be used to explain the present disclosure, and cannot be understood as limiting the present disclosure.

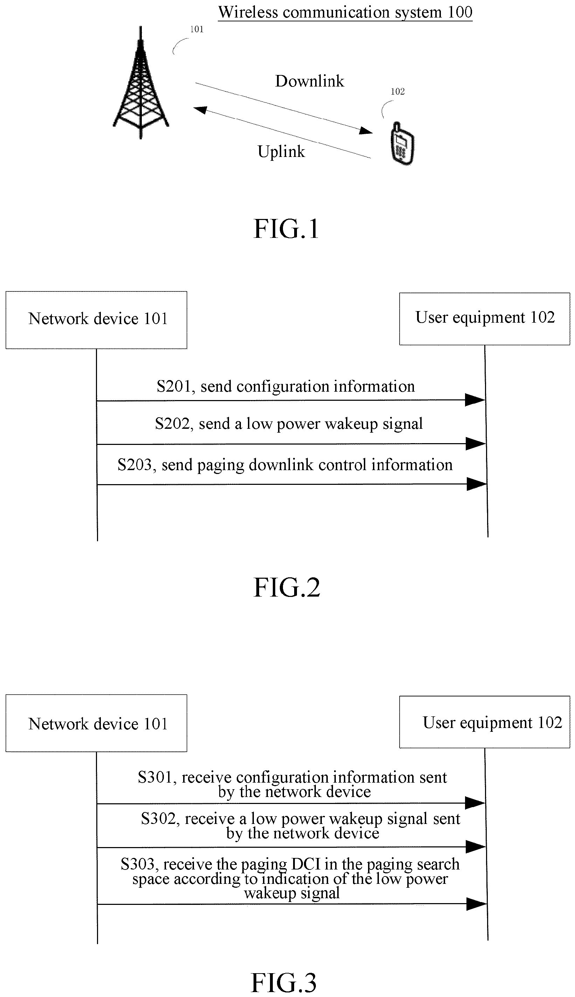

As shown in FIG. 1, a method for transmitting capability information provided by an embodiment of the present disclosure may be applied to a wireless communication system 100, which may include but is not limited to a network device 101 and a user equipment 102. The user equipment 102 is configured to support carrier aggregation, and the user equipment 102 may be connected to multiple carrier components of the network device 101, including a primary carrier component and one or more secondary carrier components.

It should be understood that the above wireless communication system 100 can be applied to both low-frequency scenarios and high-frequency scenarios. The application scenarios of the wireless communication system 100 include but are not limited to a long term evolution (LTE) system, a LTE frequency division duplex (FDD) system, a LTE time division duplex (TDD) system, a worldwide interoperability for micro wave access (WiMAX) communication system, a cloud radio access network (CRAN) system, a future fifth generation (5G) system, a new radio (NR) communication system, future evolved public land mobile network (PLMN) systems, or the like.

The user equipment 102 shown above may be a user equipment (UE), a terminal, an access terminal, a terminal unit, a terminal station, a mobile station (MS), a remote station, a remote terminal, a mobile terminal, a wireless communication device, a terminal agent, a user device, or the like. The user equipment 102 may have a wireless transceiving function, and it may communicate (such as wirelessly) with one or more network devices 101 of one or more communication systems, and receive network services provided by the network device 101, where the network device 101 includes but is not limited to the base station as shown.

The user equipment 102 can be a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, a vehicle-mounted device, a wearable device, a user equipment in a future 5G network, a user equipment in a future evolved PLMN network, or the like.

The network device 101 may be an access network device (or called an access network station). The access network device refers to a device that provides network access functions, such as a radio access network (RAN) base station, etc. The network device may specifically include a base station (BS) device, or include a base station device and a wireless resource management device for controlling the base station device, etc. The network device may also include a relay station (relay device), an access point, a base station in a future 5G network, a base station in a future evolved PLMN network, an NR base station, or the like. The network device may be a wearable device or an in-vehicle device. The network device may also be a communication chip with a communication module.

For example, the network device 101 includes but is not limited to: a next generation base station (gnodeB, gNB) in 5G, an evolved node B (eNB) in the LTE system, a radio network controller (RNC), a node B (NB) in the WCDMA system, a radio controller under the CRAN system, a base station controller (BSC), a base transceiver station (BTS) in the GSM system or the CDMA system, a home base station (for example, home evolved nodeB, or home node B (HNB)), a baseband unit (BBU), a transmitting and receiving point (TRP), a transmitting point (TP), a mobile switching center, or the like.

When using a normal wakeup signal in R17, the primary transceiver can be in a semi-dormant state to maintain coarse synchronization, and has a certain semi-dormant period. After the semi-dormant period ends, the primary transceiver ends the semi-dormant state, receives SSB, and can receive the normal wakeup signal after performing precise synchronization.

The low power wakeup signal may be applied in the present disclosure. In some examples, the low power wakeup signal may be called low power WUS.

The low power wakeup signal is different from the normal wakeup signal in R17. The low power wakeup signal corresponds to a separate receiver, which can be called a secondary transceiver. The power consumption of the secondary receiver is much lower than that of the primary receiver. The user equipment uses the low power secondary receiver to receive the low power wakeup signal and uses the primary transceiver to process uplink and downlink data, while the normal wakeup signal needs to be received by the primary transceiver.

In specific, when the primary transceiver of the user equipment is in a dormant state, after the separate receiver corresponding to the low power wakeup signal receives the low power wakeup signal, the primary transceiver will be turned on and the primary transceiver will be in an operating state. When the primary transceiver of the user equipment is in a dormant state, if the separate receiver corresponding to the low power wakeup signal does not receive the low power wakeup signal, or receives the low power wakeup signal but the low power wakeup signal indicates not to wake up, the primary transceiver continue to maintain the dormant state.

The embodiment of the present disclosure provides a method for transmitting paging search space configuration information. FIG. 2 is a flow chart of a method for transmitting paging search space configuration information according to an illustrative embodiment. As shown in FIG. 2, the method includes the following steps.

In step S201, the network device 101 sends configuration information to the user equipment 102.

The configuration information sent by the network device 101 to the user equipment 102 is used to configure a paging search space, which is used by the user equipment to receive paging DCI. After receiving the configuration information, the user equipment can know the paging search space used to receive the paging downlink control information DCI after being woken up by the low power awakening signal.

When the network device 101 sends the configuration information to the user equipment 102, the configuration information may be sent in a broadcast manner.

The user equipment 102 receives this configuration information using the primary transceiver.

In step S202, the network device 101 sends a low power wakeup signal to the user equipment 102.

When the primary transceiver of the user equipment 102 is in a dormant state, the user equipment 102 receives the low power wakeup signal using the secondary transceiver to. When the low power wakeup signal indicates to wake up, the primary transceiver enters an operating state.

In step S203, the network device 101 sends the paging DCI to the user equipment 102 in the paging search space indicated by the configuration information.

The user equipment 102 receives the paging DCI using the primary transceiver.

In some possible implementations, a cycle corresponding to the paging search space includes multiple PDCCH monitoring occasions, and each PDCCH monitoring occasion corresponds to an actually transmitted SSB beam. An SSB beam may correspond to multiple PDCCH monitoring occasions in a cycle corresponding to the paging search space. The cycle of the paging search space may refer to search space periodicity, which indicates the time interval between two adjacent paging search spaces.

In some possible implementations, the number of the PDCCH monitoring occasions included in one cycle of the paging search space is greater than or equal to M, where M is the number of the SSBs that are actually transmitted.

The number of the PDCCH monitoring occasions included in one cycle of the paging search space is not an integer multiple of M. The (i*M+k)-th PDCCH monitoring occasion in one cycle of the paging search space corresponds to the k-th actually transmitted SSB, where k is an integer greater than or equal to 1 and less than or equal to M, and i is an integer greater than or equal to 0.

In an example, the number of the SSBs that are actually transmitted is 2, and then the value of M is 2. The number of the PDCCH monitoring occasions included in one cycle of the paging search space is 2.

The first PDCCH monitoring occasion in one cycle of the paging search space corresponds to the first actually transmitted SSB, and the second PDCCH monitoring occasion corresponds to the second actually transmitted SSB.

In another example, the number of the SSBs that are actually transmitted is 2, and then the value of M is 2, and the number of the PDCCH monitoring occasions included in one cycle of the paging search space is 4.

Within one cycle of the paging search space,
the first PDCCH monitoring occasion corresponds to the first actually transmitted SSB;
the second PDCCH monitoring occasion corresponds to the second actually transmitted SSB;
the third PDCCH monitoring occasion corresponds to the first actually transmitted SSB; and
the fourth PDCCH monitoring occasion corresponds to the second actually transmitted SSB.

In some possible implementations, the number of the PDCCH monitoring occasions included in one cycle of the paging search space is a product of M and N, where M is the number of the SSBs that are actually transmitted, and N is an integer greater than 0.

The value of N is determined in one of the following ways:
I. The value of N is a fixed value agreed upon in the protocol.
II. The user equipment 102 receives system message configuration information sent by the network device, where the system message configuration information includes information used for determining N, and N is an integer greater than or equal to 1.
III. When the user equipment 102 does not receive the system message configuration information, it determines that the value of N is 1.

The (x*M+k)-th PDCCH monitoring occasion within one cycle of the paging search space corresponds to the k-th actually transmitted SSB, where x is an integer greater than or equal to 0 and less than or equal to N-1, and k is an integer greater than or equal to 1 and less than or equal to M.

In an example, the number of the SSBs that are actually transmitted is 2, and then the value of M is 2, and the number of the PDCCH monitoring occasions included in one cycle of the paging search space is 6.

Within one cycle of the paging search space,
the first PDCCH monitoring occasion corresponds to the first actually transmitted SSB;
the second PDCCH monitoring occasion corresponds to the second actually transmitted SSB;
the third PDCCH monitoring occasion corresponds to the first actually transmitted SSB;
the fourth PDCCH monitoring occasion corresponds to the second actually transmitted SSB;
the fifth PDCCH monitoring occasion corresponds to the first actually transmitted SSB; and
the sixth PDCCH monitoring occasion corresponds to the second actually transmitted SSB.

In this embodiment, the paging search space no longer corresponds to only a group of specific user devices, but corresponds to all user devices that support low power wakeup signals or that turn on low power wakeup signal monitoring. In conjunction with the use of the low power wakeup signals, when the low power wakeup signal indicates to wake up, the user equipment can turn on the primary receiver to monitor the paging DCI at the nearest paging monitoring occasion. Compared with the prior art in which the primary receiver needs to be on standby continuously and can only receive the paging DCI until the PF/PO corresponding to the UE group, the paging delay is effectively reduced, the terminal energy consumption is saved, and the energy loss caused by the primary receiver being on standby for a long time is avoided.

The embodiment of the present disclosure provides a method for transmitting paging search space configuration information, which is performed by user equipment 102. FIG. 3 is a flowchart of a method for transmitting paging search space configuration information according to an illustrative embodiment. As shown in FIG. 3, the method includes the following steps.

In step S301, configuration information sent by a network device is received.

The configuration information sent by the network device is used to configure a paging search space, and the paging search space is used for the user equipment to receive paging downlink control information (DCI).

The configuration information is sent by the network device in a broadcasting manner.

In step S302, a low power wakeup signal sent by the network device is received.

In step S303, a paging DCI is received in the paging search space according to indication of the low power wakeup signal.

In some possible implementations, in step S302, when the primary transceiver is in a dormant state, a low power wakeup signal is received by the secondary transceiver. When the low power wakeup signal indicates to wake up, the primary transceiver ends the dormant state, and the paging DCI in the paging search space is received through the primary transceiver in step S303.

In some possible implementations, a cycle corresponding to the paging search space includes multiple PDCCH monitoring occasions, and each PDCCH monitoring occasion corresponds to an actually transmitted SSB beam. An SSB beam may correspond to multiple PDCCH monitoring occasions in a cycle corresponding to the paging search space.

In some possible implementations, the number of the PDCCH monitoring occasions included in one cycle of the paging search space is greater than or equal to M, where M is the number of the SSBs that are actually transmitted.

The number of PDCCH monitoring occasions included in one cycle of the paging search space is not an integer multiple of M. The (i*M+k)-th PDCCH monitoring occasion in one cycle of the paging search space corresponds to the k-th actually transmitted SSB, where k is an integer greater than or equal to 1 and less than or equal to M, and i is an integer greater than or equal to 0.

In an example, the number of the SSBs that are actually transmitted is 2, and then the value of M is 2. The number of PDCCH monitoring occasions included in one cycle of the paging search space is 2.

The first PDCCH monitoring occasion in one cycle of the paging search space corresponds to the first actually transmitted SSB, and the second PDCCH monitoring occasion corresponds to the second actually transmitted SSB.

In another example, the number of the SSBs that are actually transmitted is 2, and then the value of M is 2, and the number of PDCCH monitoring occasions included in one cycle of the paging search space is 4.

Within one cycle of the paging search space,
the first PDCCH monitoring occasion corresponds to the first actually transmitted SSB;
the second PDCCH monitoring occasion corresponds to the second actually transmitted SSB;
the third PDCCH monitoring occasion corresponds to the first actually transmitted SSB; and
the fourth PDCCH monitoring occasion corresponds to the second actually transmitted SSB.

In some possible implementations, the number of the PDCCH monitoring occasions included in one cycle of the paging search space is a product of M and N, where M is the number of the SSBs that are actually transmitted, and N is an integer greater than zero.

The value of N is determined in one of the following ways.
I. The value of N is a fixed value agreed upon in the protocol.
II. The user equipment 102 receives system message configuration information sent by the network device, where the system message configuration information includes information used for determining N, where N is an integer greater than or equal to 1.
III. When the user equipment 102 does not receive the system message configuration information, it determines that the value of N is 1.

The (x*M+k)-th PDCCH monitoring occasion within one cycle of the paging search space corresponds to the k-th actually transmitted SSB, where x is an integer greater than or equal to 0 and less than or equal to N-1, and k is an integer greater than or equal to 1 and less than or equal to M.

In an example, the number of the SSBs that are actually transmitted is 2, and then the value of M is 2, and the number of the PDCCH monitoring occasions included in one cycle of the paging search space is 6.

Within one cycle of the paging search space,
the first PDCCH monitoring occasion corresponds to the first actually transmitted SSB;
the second PDCCH monitoring occasion corresponds to the second actually transmitted SSB;
the third PDCCH monitoring occasion corresponds to the first actually transmitted SSB;
the fourth PDCCH monitoring occasion corresponds to the second actually transmitted SSB;
the fifth PDCCH monitoring occasion corresponds to the first actually transmitted SSB; and
the sixth PDCCH monitoring occasion corresponds to the second actually transmitted SSB.

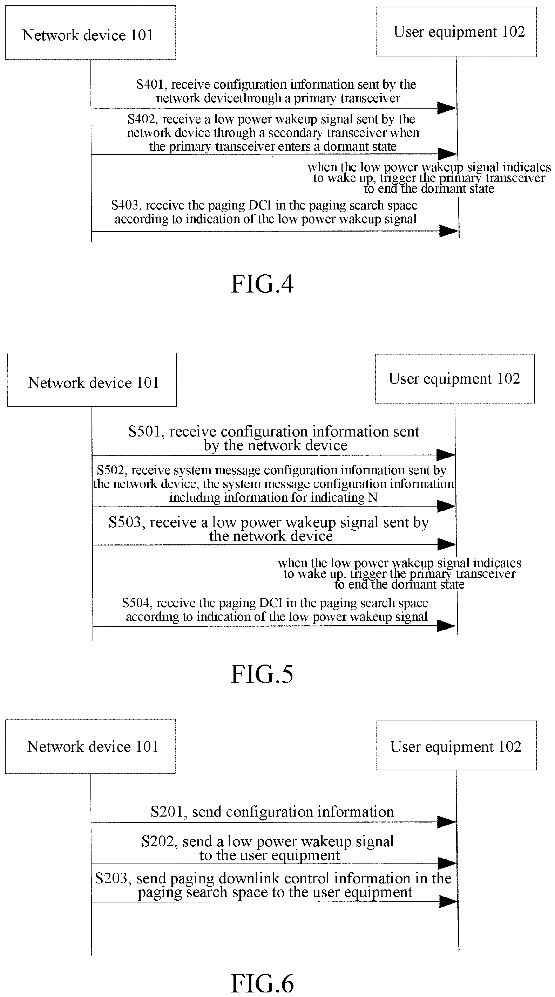

The embodiment of the present disclosure provides a method for transmitting paging search space configuration information, which is performed by a user equipment. FIG. 4 is a flowchart of a method for transmitting paging search space configuration information according to an illustrative embodiment. As shown in FIG. 4, the method includes the following steps.

In step S401, configuration information sent by a network device is received through a primary transceiver.

The configuration information is used to configure a paging search space, and the paging search space is used for the user equipment to receive paging downlink control information (DCI).

In step S402, after the primary transceiver enters a dormant state, a low power wakeup signal sent by the network device is received though a secondary transceiver, and when the low power wakeup signal indicates to wake up, the primary transceiver is triggered to end the dormant state.

In step S403, the paging DCI is received in the paging search space through the primary transceiver.

The embodiment of the present disclosure provides a method for transmitting paging search space configuration information, which is performed by a user equipment. FIG. 5 is a flowchart of a method for transmitting paging search space configuration information according to an illustrative embodiment. As shown in FIG. 5, the method includes the following steps.

In step S501, configuration information sent by a network device is received.

The configuration information is used to configure a paging search space, and the paging search space is used for the user equipment to receive paging downlink control information (DCI).

The configuration information is sent by the network device in a broadcasting manner.

In step S502, system message configuration information sent by the network device is received, where the system message configuration information includes information used for determining N, N being an integer greater than or equal to 1.

In step S503, a low power wakeup signal sent by the network device is received.

In step S504, the paging DCI is received in the paging search space according to indication of the low power wakeup signal.

In some possible implementations, step S502 further includes: determining that the number of PDCCH monitoring occasions included in one cycle of the paging search space is a product of M and N, where M is the number of the SSBs that are actually transmitted.

In some possible implementations, the (x*M+k)-th PDCCH monitoring occasion within one cycle of the paging search space corresponds to the k-th actually transmitted SSB, where x is an integer greater than or equal to 0 and less than or equal to N-1, and k is an integer greater than or equal to 1 and less than or equal to M.

The embodiment of the present disclosure provides a method for transmitting paging search space configuration information, which is performed by the network device 101. FIG. 6 is a flowchart of a method for transmitting paging search space configuration information according to an illustrative embodiment. As shown in FIG. 6, the method includes the following steps.

In step S601, configuration information is sent.

The configuration information sent by the network device is used to configure a paging search space, and the paging search space is used for the user equipment to receive paging downlink control information (DCI).

The configuration information may be broadcast via a system message.

In step S602, a low power wakeup signal is sent to the user equipment;
In step S603, the paging DCI is sent to the user equipment in the paging search space.

The low power wakeup signal is different from the normal wakeup signal. The user equipment uses a low power secondary receiver to receive the low power wakeup signal, while the ordinary wakeup signal needs to be received by the primary transceiver. The power consumption of the secondary receiver is much lower than that of the primary receiver.

In some possible implementations, a cycle corresponding to the paging search space includes multiple PDCCH monitoring occasions, and each PDCCH monitoring occasion corresponds to an actually transmitted SSB beam. An SSB beam may correspond to multiple PDCCH monitoring occasions in one cycle corresponding to the paging search space.

In some possible implementations, the number of the PDCCH monitoring occasions included in one cycle of the paging search space is greater than or equal to M, where M is the number of the SSBs that are actually transmitted.

The number of the PDCCH monitoring occasions included in one cycle of the paging search space is not an integer multiple of M. The (i*M+k)-th PDCCH monitoring occasion in one cycle of the paging search space corresponds to the k-th actually transmitted SSB, where k is an integer greater than or equal to 1 and less than or equal to M, and i is an integer greater than or equal to 0.

In some possible implementations, the network device also sends system message configuration information to the user equipment, where the system message configuration information includes information used for determining N, N being an integer greater than or equal to 1.

The (x*M+k)-th PDCCH monitoring occasion within one cycle of the paging search space corresponds to the k-th actually transmitted SSB, where x is an integer greater than or equal to 0 and less than or equal to N-1, and k is an integer greater than or equal to 1 and less than or equal to M.

Based on the same concept as that in the above method embodiments, the embodiments of the present disclosure further provide a communication apparatus, which may have the functions of the user equipment 102 in the above method embodiments, and is configured to perform the steps performed by the user equipment 102 provided in the above embodiments. The functions may be implemented by hardware, by software, or by hardware executing corresponding software. The hardware or software includes one or more modules corresponding to the above functions.

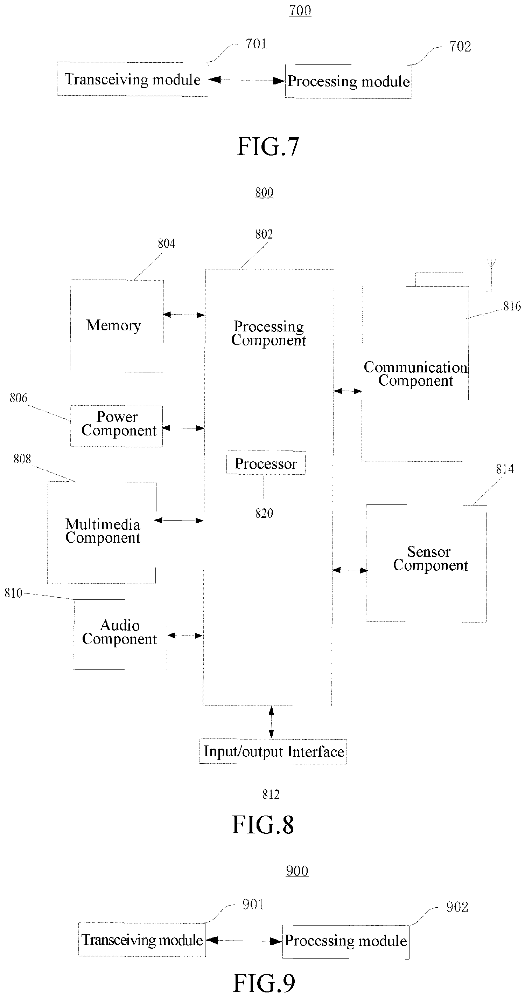

In a possible implementation, the communication apparatus 700 shown in FIG. 7 may serve as the user equipment 102 involved in the above method embodiments, and perform the steps performed by the user equipment 102 in the above method embodiments.

The communication apparatus 700 includes a transceiving module 701 and a processing module 702.

The transceiving module 701 is configured to receive configuration information sent by a network device, where the configuration information is used to configure a paging search space, and the paging search space is used by the user equipment to receive paging downlink control information (DCI); is further configured to receive a low power wakeup signal sent by the network device; and is further configured to receive the paging DCI in the paging search space according to indication of the low power wakeup signal.

In some possible implementations, a cycle corresponding to the paging search space includes multiple PDCCH monitoring occasions, and each PDCCH monitoring occasion corresponds to an actually transmitted SSB beam.

In some possible implementations, the number of the PDCCH monitoring occasions included in one cycle of the paging search space is greater than or equal to M, where M is the number of the SSBs that are actually transmitted.

In some possible implementations, the number of the PDCCH monitoring occasions included in one cycle of the paging search space is not an integer multiple of M.

In some possible implementations, the (i*M+k)-th PDCCH monitoring occasion within one cycle of the paging search space corresponds to the k-th actually transmitted SSB, where k is an integer greater than or equal to 1 and less than or equal to M, and i is an integer greater than or equal to 0.

In some possible implementations, the number of the PDCCH monitoring occasions included in one cycle of the paging search space is a product of M and N, where M is the number of the SSBs that are actually transmitted, and N is an integer greater than zero.

In some possible implementations, the transceiving module 701 is further configured to receive system message configuration information sent by the network device, where the system message configuration information includes information used for determining N, where N is an integer greater than or equal to 1.

In some possible implementations, the processing module 702 is configured to determine that a value of N is 1 in a case where the system message configuration information is not received.

In some possible implementations, the (x*M+k)-th PDCCH monitoring occasion within one cycle of the paging search space corresponds to the k-th actually transmitted SSB, where x is an integer greater than or equal to 0 and less than or equal to N-1, and k is an integer greater than or equal to 1 and less than or equal to M.

When the communication apparatus is a user equipment, its structure may also be as shown in FIG. 8. FIG. 8 is a block diagram of an apparatus 800 for transmitting paging search space configuration information according to an illustrative embodiment. For example, the apparatus 800 may be a mobile phone, a computer, a digital broadcast terminal, a messaging device, a game console, a tablet device, a medical device, a fitness device, a personal digital assistant, etc.

Referring to FIG. 8, the apparatus 800 may include one or more of the following components: a processing component 802, a memory 804, a power component 806, a multimedia component 808, an audio component 810, an input/ output (I/O) interface 812, a sensor component 814, and a communication component 816.

The processing component 802 generally controls the overall operation of the apparatus 800, such as operations associated with display, phone calls, data communications, camera operations, and recording operations. The processing component 802 may include one or more processors 820 to execute instructions to complete all or part of the steps of the above-mentioned methods. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations on the apparatus 800. Examples of such data include instructions for any application or method operating on the apparatus 800, contact data, phone book data, messages, pictures, videos, etc. The memory 804 can be implemented by any type of volatile or non-volatile storage device or a combination thereof, such as a static random access memory (SRAM), an electrically erasable programmable read-only memory (EEPROM), an erasable Programmable read-only memory (EPROM), a programmable read-only memory (PROM), a read-only memory (ROM), a magnetic memory, a flash memory, a magnetic disk or an optical disk.

The power component 806 provides power to the various components of the apparatus 800. The power component 806 may include a power management system, one or more power supplies, and other components associated with generating, managing, and distributing power for the apparatus 800.

The multimedia component 808 includes a screen that provides an output interface between the apparatus 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the apparatus 800 is in an operating mode, such as a shooting mode or a video mode, the front camera and/or the rear camera may receive external multimedia data. Each front camera and rear camera may be a fixed optical lens system or have a focal length and optical zoom capability.

The audio component 810 is configured to output and/ or input audio signals. For example, the audio component 810 includes a microphone (MIC), and when the apparatus 800 is in an operating mode, such as a call mode, a recording mode, and a speech recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between the processing component 802 and a peripheral interface module, which may be a keyboard, a click wheel, a button, etc. These buttons may include, but are not limited to, a home button, a volume button, a start button, and a lock button.

The sensor component 814 includes one or more sensors for providing status assessment of various aspects for the apparatus 800. For example, the sensor component 814 can detect the open/closed state of the apparatus 800, the relative positioning of the components, such as the display and keypad of the apparatus 800, and the sensor component 814 can also detect a change in position of the apparatus 800 or a component of the apparatus 800, the presence or absence of user contact with the apparatus 800, the orientation or acceleration/deceleration of the apparatus 800, and the temperature change of the apparatus 800. The sensor component 814 may include a proximity sensor configured to detect the presence of a nearby object without any physical contact. The sensor component 814 may also include an optical sensor, such as a CMOS or CCD image sensor, for use in imaging applications. In some embodiments, the sensor component 814 may also include an accelerometer, a gyroscope sensor, a magnetic sensor, a pressure sensor, or a temperature sensor.

The communication component 816 is configured to facilitate wired or wireless communication between the apparatus 800 and other devices. The apparatus 800 can access a wireless network based on a communication standard, such as Wi-Fi, 4G or 5G, or a combination thereof. In an illustrative embodiment, the communication component 816 receives a broadcast signal or broadcast-related information from an external broadcast management system via a broadcast channel. In an illustrative embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an illustrative embodiment, the apparatus 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an illustrative embodiment, a non-transitory computer-readable storage medium including instructions is also provided, such as a memory 804 including instructions, and the instructions can be executed by a processor 820 of the apparatus 800 to perform the above methods. For example, the non-transitory computer-readable storage medium can be a ROM, a random access memory (RAM), a CD-ROM, a magnetic tape, a floppy disk, an optical data storage device, etc.

Based on the same concept as the above method embodiments, the embodiments of the present disclosure also provide a communication apparatus, which can have the function of the network device 101 in the above method embodiments, and is configured to perform the steps performed by the network device 101 provided in the above embodiments. The functions can be implemented by hardware, by software, or by hardware executing corresponding software. The hardware or software includes one or more modules corresponding to the above functions.

In a possible implementation, the communication apparatus 900 shown in FIG. 9 may serve as the network device 101 involved in the above method embodiments, and perform the steps performed by the network device 101 in the above method embodiments.

The communication apparatus 900 shown in FIG. 9 includes a transceiving module 901 configured to send configuration information to a user equipment, where the configuration information is used to configure a paging search space, and the paging search space is used for the user equipment to receive paging downlink control information (DCI); send a low power wakeup signal to the user equipment; and send the paging (DCI) in the paging search space.

In some possible implementations, a paging cycle corresponding to the paging search space includes multiple PDCCH monitoring occasions, and each PDCCH monitoring occasion corresponds to an actually transmitted SSB beam.

In some possible implementations, the number of the PDCCH monitoring occasions included in one paging cycle is greater than or equal to M, where M is the number of the SSBs that are actually transmitted.

In some possible implementations, the number of the PDCCH monitoring occasions included in one paging cycle is not an integer multiple of M.

In some possible implementations, the (i*M+k)-th PDCCH monitoring occasion in one paging cycle corresponds to the k-th actually transmitted SSB, and k is an integer greater than or equal to 1 and less than or equal to M. In some possible implementations, the number of the PDCCH monitoring occasions included in the one paging cycle is a product of M and N, M is the number of the SSBs that are actually transmitted, and N is an integer greater than 0.

In some possible implementations, the transceiving module 801 is further configured to send system message configuration information to the user equipment, where the system message configuration information includes information used for determining N, N being an integer greater than or equal to 1.

In some possible implementations, the (x*M+k)-th PDCCH monitoring occasion within the one paging cycle corresponds to the k-th actually transmitted SSB, where x is an integer greater than or equal to 0 and less than or equal to N-1, and k is an integer greater than or equal to 1 and less than or equal to M.

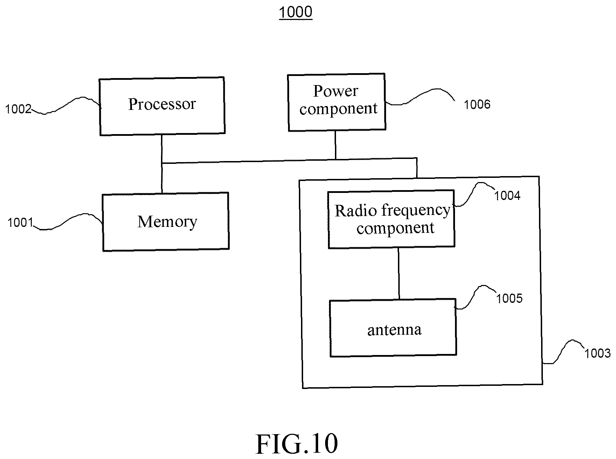

When the communication device is the network device 101, its structure can also be as shown in FIG. 10. As shown in FIG. 10, the apparatus 1000 includes a memory 1001, a processor 1002, a transceiver component 1003, and a power supply component 1006. The memory 1001 is coupled to the processor 1002, and can be configured to store programs and data necessary for the communication apparatus 1000 to implement various functions. The processor 1002 is configured to support the communication apparatus 1000 to perform the corresponding functions in the above methods, and the functions can be implemented by calling the program stored in the memory 1001. The transceiver component 1003 can be a wireless transceiver, which can be configured to support the communication apparatus 1000 to receive signaling and/or data and send signaling and/or data through a radio interface. The transceiver component 1003 may also be referred to as a transceiver unit or a communication unit. The transceiver component 1003 may include a radio frequency component 1004 and one or more antennas 1005, where the radio frequency component 1004 may be a remote radio unit (RRU), which may be specifically used for transmission of radio frequency signals and conversion between radio frequency signals and baseband signals, and the one or more antennas 1005 may be specifically used for radiation and reception of radio frequency signals.

When the communication apparatus 1000 needs to send data, the processor 1002 can perform baseband processing on the data to be sent, and then output the baseband signal to the RF unit. The RF unit performs RF processing on the baseband signal and then sends the RF signal in the form of electromagnetic waves through the antenna. When data is sent to the communication apparatus 1000, the RF unit receives the RF signal through the antenna, converts the RF signal into a baseband signal, and outputs the baseband signal to the processor 1002. The processor 1002 converts the baseband signal into data and processes the data.

Those skilled in the art will readily appreciate other implementations of the embodiments of the present disclosure after considering the specification and practicing the present disclosure disclosed herein. The present disclosure is intended to cover any variations, uses, or adaptations of the embodiments of the present disclosure, which follow the general principles of the embodiments of the present disclosure and include common knowledge or conventional technical measure in the art that are not disclosed in the present disclosure. The specification and embodiments are to be considered as illustrative only, and the true scope and spirit of the embodiments of the present disclosure are specified by the following claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

### Industrial Applicability

The paging search space corresponds to all user devices that support the low power wakeup signal or that turn on low power wakeup signal monitoring. In conjunction with the use of the low power wakeup signal, when the low power wakeup signal indicates to wake up, the user equipment can turn on the primary receiver to monitor the paging DCI at the nearest paging monitoring occasion. Compared with the prior art in which the primary receiver needs to be on standby continuously and can only receive the paging DCI until the PF/PO corresponding to the UE group, the paging delay is effectively reduced, the terminal energy consumption is saved, and the energy loss caused by the primary receiver being on standby for a long time is avoided.

## Claims

1. A method for receiving paging search space configuration information, performed by a user equipment, the method comprising:
receiving configuration information sent by a network device, wherein the configuration information is used to configure a paging search space, and the paging search space is used for the user equipment to receive paging downlink control information (DCI);
receiving a low power wakeup signal sent by the network device; and
receiving the paging DCI in the paging search space according to indication of the low power wakeup signal.

2. The method according to claim 1, wherein,
a cycle corresponding to the paging search space comprises multiple PDCCH monitoring occasions; and
each PDCCH monitoring occasion corresponds to an actually transmitted SSB beam.

3. The method according to claim 1, wherein,
the number of PDCCH monitoring occasions included in one cycle of the paging search space is greater than or equal to M, M being the number of SSBs that are actually transmitted.

4. The method according to claim 3, wherein,
the number of PDCCH monitoring occasions included in one cycle of the paging search space is not an integer multiple of M.

5. The method according to claim 4, wherein,
the (i*M+k)-th PDCCH monitoring occasion within one cycle of the paging search space corresponds to the k-th actually transmitted SSB, k being an integer greater than or equal to 1 and less than or equal to M, and i being an integer greater than or equal to 0.

6. The method according to claim 1, wherein
the number of PDCCH monitoring occasions included in one cycle of the paging search space is a product of M and N, M being the number of SSBs that are actually transmitted, and N being an integer greater than zero.

7. The method according to claim 6, wherein the method further comprises:
receiving system message configuration information sent by the network device, wherein the system message configuration information comprises information used for determining N, N being an integer greater than or equal to 1.

8. The method according to claim 6, wherein the method further comprises:
determining a value of N to be 1 in a case where no system message configuration information is received.

9. The method according to claim 6, wherein,
the (x*M+k)-th PDCCH monitoring occasion within one cycle of the paging search space corresponds to the k-th actually transmitted SSB, x being an integer greater than or equal to 0 and less than or equal to N-1, and k being an integer greater than or equal to 1 and less than or equal to M.

10. A method for sending paging search space configuration information, performed by a network device, the method comprising:
sending configuration information to a user equipment, wherein the configuration information is used to configure a paging search space, and the paging search space is used for the user equipment to receive paging downlink control information (DCI);
sending a low power wakeup signal to the user equipment; and
sending the paging DCI in the paging search space.

11. The method according to claim 10, wherein,
a paging cycle corresponding to the paging search space comprises multiple PDCCH monitoring occasions; and
each PDCCH monitoring occasion corresponds to an actually transmitted SSB beam.

12. The method according to claim 10, wherein,
the number of PDCCH monitoring occasions included in one paging cycle is greater than or equal to M, M being the number of SSBs that are actually transmitted.

13. The method according to claim 12, wherein,
the number of PDCCH monitoring occasions included in the one paging cycle is not an integer multiple of M.

14. The method according to claim 13, wherein,
the (i*M+k)-th PDCCH monitoring occasion in the one paging cycle corresponds to the k-th actually transmitted SSB, k being an integer greater than or equal to 1 and less than or equal to M.

15. The method according to claim 10, wherein,
the number of PDCCH monitoring occasions included in the one paging cycle is a product of M and N, M being the number of SSBs that are actually transmitted, and N being an integer greater than zero.

16. The method according to claim 15, wherein the method further comprises:
sending system message configuration information to the user equipment, wherein the system message configuration information comprises information used for determining N, N being an integer greater than or equal to 1.

17. The method according to claim 15, wherein,
the (x*M+k)-th PDCCH monitoring occasion in the one paging cycle corresponds to the k-th actually transmitted SSB, x being an integer greater than or equal to 0 and less than or equal to N-1, and k being an integer greater than or equal to 1 and less than or equal to M.

18. A communication apparatus, configured in a user equipment, wherein,
a transceiving module is configured to receive configuration information sent by a network device, the configuration information is used to configure a paging search space, and the paging search space is used for the user equipment to receive paging downlink control information (DCI); is further configured to receive a low power wakeup signal sent by the network device; and is further configured to receive the paging DCI in the paging search space according to indication of the low power wakeup signal.

19. A communication apparatus, configured in a network device, wherein,
a transceiving module is configured to send configuration information to a user equipment, the configuration information is used to configure a paging search space, and the paging search space is used for the user equipment to receive paging downlink control information (DCI); is further configured to send a low power wakeup signal to the user equipment; and is further configured to send the paging DCI in the paging search space.

20. A communication apparatus, comprising a processor and a memory, wherein,
the memory is configured to store a computer program; and
the processor is configured to execute the computer program to implement the method according to any one of claims 1 to 9.

21. A communication apparatus, comprising a processor and a memory, wherein,
the memory is configured to store a computer program; and
the processor is configured to execute the computer program to implement the method according to any one of claims 10 to 17.

22. A computer-readable storage medium having stored thereon instructions which, when being called and executed on a computer, cause the computer to perform the method according to any one of claims 1 to 9.

23. A computer-readable storage medium having stored thereon instructions which, when being called and executed on a computer, cause the computer to perform the method according to any one of claims 10 to 17.
